# EUROPEAN PATENT APPLICATION

(11) **EP 4 262 197 A1**
(43) Date of publication of application: **18.10.2023**
(21) Application number: 20965351.8
(22) Date of filing: 14.12.2020
(51) Int. Cl.: H04N 13/00, G06T 7/50

(54) **IMAGE FILLING METHOD AND APPARATUS, DECODING METHOD AND APPARATUS, ELECTRONIC DEVICE, AND MEDIUM**

(71) Applicant: Zhejiang University, Hangzhou, Zhejiang 310058 (CN); GUANGDONG OPPO MOBILE TELECOMMUNICATIONS CORP., LTD., Dongguan, Guangdong 523860 (CN)
(72) Inventor: YU, Lu, Dongguan, Guangdong 523860 (CN); LI, Sicheng, Dongguan, Guangdong 523860 (CN); WANG, Chuchu, Dongguan, Guangdong 523860 (CN); XIE, Zhihuang, Dongguan, Guangdong 523860 (CN); DAI, Zhenyu, Dongguan, Guangdong 523860 (CN)
(74) Representative: Novagraaf Technologies
(86) International application number: PCT/CN2020/136215
(87) International publication number: WO 2022/126333

(57) **Abstract**

Embodiments of the present disclosure provide an image filling method and apparatus, a decoding method and apparatus, an electronic device, and a medium. The image filling method disclosed in an embodiment includes: determining an available pixel and an unavailable pixel at the periphery of a void according to the depth of pixels in the peripheral region of the void in an image to be filled, where the depth value of the available pixel is greater than the depth value of the unavailable pixel; and filling the void at least according to the available pixel.

## Description

### TECHNICAL FIELD

Embodiments of the present disclosure relate to, but are not limited to, picture processing technology, in particular to a method and device for picture filling, a decoding method, a decoding device, an electronic device and a medium.

### BACKGROUND

In an immersive video application involving translational degree of freedom, movement of a viewer's viewing position will lead to exposure of some regions that have not been captured before, and the regions are called holes. In order to ensure integrity of a picture presented to the viewer, an immersive video system involving the translational degree of freedom will set a operation for repairing the holes in the picture at the end of decoding end, and this operation is called hole filling.

A method for the hole filling used in related art is pixel-by-pixel traversal interpolation method. However, in the pixel-by-pixel traversal interpolation method, each pixel to be filled only takes two pixels as reference objects to fill the holes, so that it is difficult to repair the holes to present detailed and realistic textures.

Therefore, in the immersive video application, a new method is needed to fill the holes in the picture, so as to repair the holes to present detailed and realistic texture.

### SUMMARY

An exemplary embodiment of the present disclosure provides a method for picture filling including following two operations.

Available pixel(s) and unavailable pixel(s) in the periphery region of the hole is(are) determined according to depths of pixels in a periphery region of a hole in a picture to be filled, where depth value(s) of the available pixel(s) is(are) greater than depth value(s) of the unavailable pixel(s).

The hole is filled based at least on the available pixel(s).

An exemplary embodiment of the present disclosure provides a device for picture filling including a determining unit and a filling unit.

The determining unit is configured to determine, according to depths of pixels in a periphery region of a hole in a picture to be filled, available pixel(s) and unavailable pixel(s) in the periphery region of the hole, where depth value(s) of the available pixel(s) is(are) greater than depth value(s) of the unavailable pixel(s).

The filling unit is configured to fill the hole based at least on the available pixel(s).

An exemplary embodiment of the present disclosure provides a decoding method including following two operations.

Available pixel(s) and unavailable pixel(s) in the periphery region of the hole is(are) determined according to depths of pixels in a periphery region of a hole in a picture to be filled, where depth value(s) of the available pixel(s) is(are) greater than depth value(s) of the unavailable pixel(s).

The hole is filled based at least on the available pixel(s).

The picture to be filled is a picture acquired from an original picture obtained by performing video decoding on an encoded picture.

An exemplary embodiment of the present disclosure provides a decoding device including a determining unit and a filling unit.

The determining unit is configured to determine, according to depths of pixels in a periphery region of a hole in a picture to be filled, available pixel(s) and unavailable pixel(s) in the periphery region of the hole, where depth value(s) of the available pixel(s) is(are) greater than depth value(s) of the unavailable pixel(s).

The filling unit is configured to fill the hole based at least on the available pixel(s).

The picture to be filled is a picture acquired from an original picture obtained by performing video decoding on an encoded picture.

An exemplary embodiment of the present disclosure provides an electronic device including a processor and a memory storing computer programs executable on the processor, where the processor is configured to implement the method for picture filling as described above when executing the computer programs, or implement the decoding method as described above when executing the computer programs.

An exemplary embodiment of the present disclosure provides a computer-readable storage medium having stored thereon computer programs that, when executed by a processor, cause the processor to implement the method for picture filling as described above, or implement the decoding method as described above.

### BRIEF DESCRIPTION OF THE DRAWINGS

The accompanying drawings are used for providing an understanding of the exemplary embodiments of the present disclosure, and constitute a part of the specification, and together with the exemplary embodiments of the present disclosure, serve to explain the technical aspects of the exemplary embodiments of the present disclosure, and are not limiting to the technical scheme of the exemplary embodiments of the present disclosure.
FIG. 1 is a schematic diagram of a framework of a Moving Pictures Experts Group (MPEG) immersive video system in the related art.
FIG. 2 is a flowchart of a Test model on MPEG Immersive Video (TMIV) encoder performing data expression in related art.
FIG. 3 is a flowchart of a TMIV decoder performing data expression in related art.
FIG. 4 is a flowchart of a method for picture filling according to an exemplary embodiment of the present disclosure.
FIG. 5 is a flowchart of a method for picture filling according to an exemplary embodiment of the present disclosure.
FIG. 6 is a schematic diagram of an original texture picture to be filled.
FIG. 7 is a schematic diagram of an original depth picture to be filled.
FIG. 8 is a schematic diagram of a hole mask picture.
FIG. 9a is a schematic diagram of a texture picture to be filled.
FIG. 9b is a schematic diagram of available pixels in a periphery region of the hole in FIG. 6a.
FIG. 9c is a schematic diagram of a hole peripheral availability template picture of the hole in FIG. 6a.
FIG. 9d is a schematic diagram of a texture picture corresponding to the texture picture to be filled shown in FIG. 6a.
FIG. 9e is a schematic diagram of a real picture corresponding to the texture picture to be filled shown in FIG. 6a.
FIG. 10a is a schematic diagram of a texture picture to be filled.
FIG. 10b is a schematic diagram of available pixels in a periphery region of the hole in FIG. 7a.
FIG. 10c is a schematic diagram of a hole peripheral availability template picture of the hole in FIG. 7a.
FIG. 10d is a schematic diagram of a texture picture corresponding to the texture picture to be filled shown in FIG. 7a.
FIG. 10e is a schematic diagram of a real picture corresponding to the texture picture to be filled shown in FIG. 7a.
FIG. 11 is a schematic diagram of performing hole filling by using a neural network trained in advance.
FIG. 12 is a schematic structural diagram of a device for picture filling according to an exemplary embodiment of the present disclosure.
FIG. 13 is a flowchart of a decoding method according to an exemplary embodiment of the present disclosure.
FIG. 14 is a schematic structural diagram of a decoding device according to an exemplary embodiment of the present disclosure.
FIG. 15 is a schematic structural diagram of an electronic device according to an exemplary embodiment of the present disclosure.

### DETAILED DESCRIPTION

When representative and exemplarily embodiments are described, the specification may have presented the method and/or process as a particular sequence of steps. However, to the extent that the method or process does not depend on the particular order of the steps described herein, the method or process should not be limited to the particular order of steps. As will be appreciated by those of ordinary skill in the art, other sequences of steps are also possible. Accordingly the particular sequence of steps set forth in the specification should not be construed as limiting the claims. Furthermore, the claims for the method and/or process should not be limited to perform the steps of the method and/or process in the sequence disclosed in the specification, which can be readily appreciated by those skilled in the art that the sequence can change and the changed sequence remain within the spirit and scope of the disclosed embodiments.

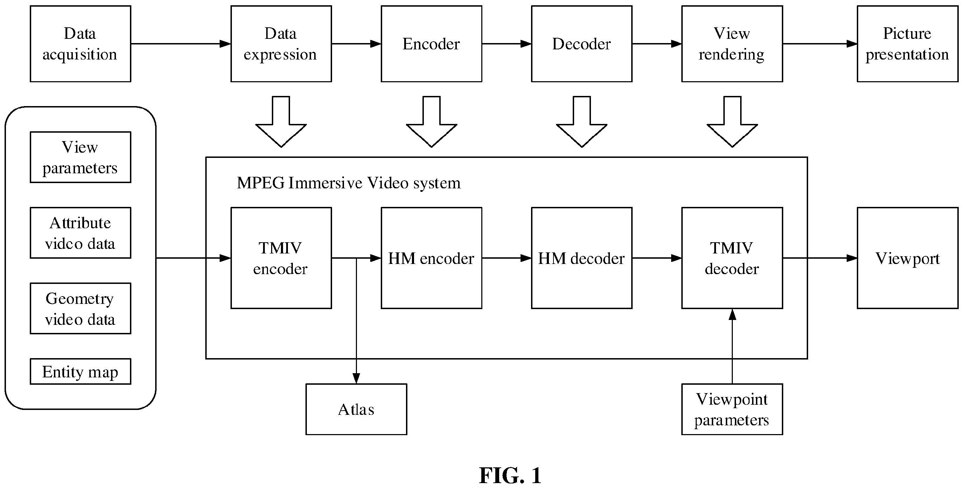

FIG. 1 is a schematic diagram of a framework of MPEG Immersive Video (MIV) system in related art. As shown in FIG. 1, the MIV system includes a TMIV encoder, a High Efficiency Video Coding (HEVC) MIV (HM) encoder, a HM decoder and a TMIV decoder.

The HM encoder and the HM decoder can also be replaced by a Versatile Video Coding (VVC) Test model (VTM) encoder and a VTM decoder, and can also be other types of encoders and decoders, which are not limited herein.

As shown in FIG. 1, acquired data is transmitted to the TMIV encoder, and the data includes view parameters, attribute video data, geometry video data and entity map. The TMIV encoder performs data expression processing on the received data and then outputs Atlas on the one hand, and transmits the processed data to the HM encoder on the other hand. The HM encoder performs video encoding on the received data and transmits the encoded data to the HM decoder. The HM decoder decodes the received data and transmits the decoded data to the TMIV decoder. TMIV decoder performs view rendering on the received data according to the viewport parameters, and transmits the rendered data to a viewport used for presenting the picture.

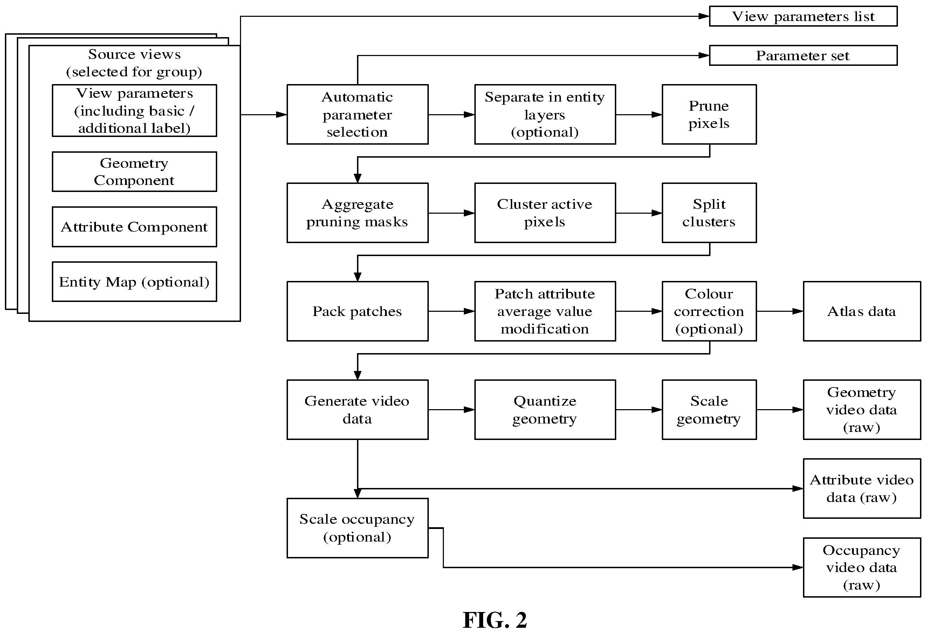

For the TMIV encoder, a flowchart of performing the data expression is shown in FIG. 2 including the following six operations.

Automatic parameter selection is performed on data of Source views. The data of the source views (selected for group) includes: view parameters (including basic /additional label), Geometry Component, Attribute Component and Entity Map (optional), and the source views can also output a view parameters list.

After the automatic parameter selection, a parameter set is output on the one hand, and an operation of separating in entity layers (optional) is performed on the other hand. Purposes of the automatic parameter selection and the operation of separating in entity layers are preparing source materials.

After the operation of separating in entity layers is performed, operations of pruning pixels and aggregating pruning masks are performed in sequence. The operations of pruning pixels and aggregating pruning masks belong to pruning processes.

After the operation of aggregating pruning masks is performed, operations of clustering active pixels, splitting clusters, packing patches, patch attribute average value modification, and colour correction (optional) are performed in sequence. The operations of clustering active pixels, splitting clusters, packing patches, patching attribute average value modification, and colour correction all belong to atlas processes.

After the colour correction is performed, atlas data is output on the one hand, and video data is generated on the other hand.

After the video data is generated, in a first aspect, operations of quantization geometry and scaling geometry are performed in sequence to generate geometry video data (raw). In a second aspect, attribute video data (raw) is directly generated. In a third aspect, an operation of scaling occupancy (optional) is performed to generate occupancy video data (raw).

The operations of generating video data, quantization geometry, scaling geometry and scaling occupancy all belong to video processes.

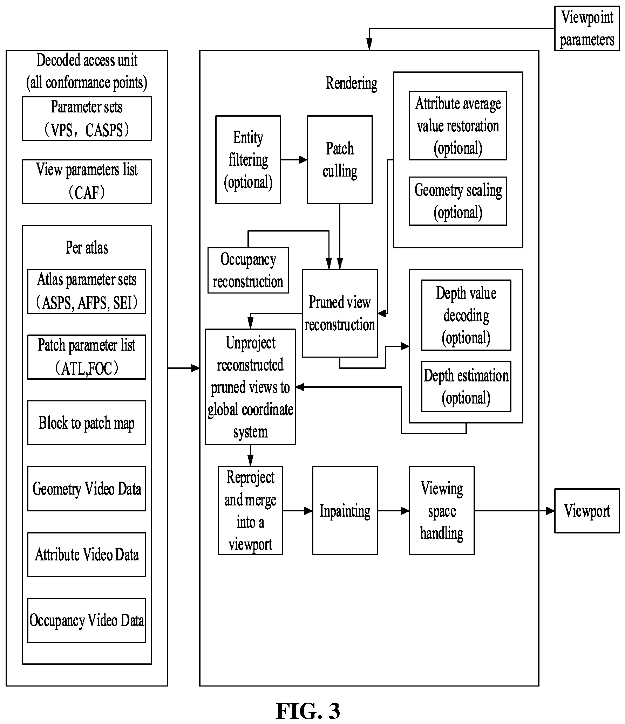

For the TMIV decoder, a flowchart of performing the picture rendering is shown in FIG. 3. For decoded access units (all conformance points), the picture rendering is performed according to the viewport parameters. The decoded access units (all conformance points) includes parameter sets (Virtual Private Server (VPS), Central Authetication Service (CAS) Private Server Single (CASPS), View Parameters list (Core Audio File(CAF)), and multiple atlases. Each of the atlases (Per atlas) includes: atlas parameter sets (Active Server Page Script (ASPS), Apple File System (AFPS), Supplementary enhancement information (SEI), patch parameter list (Adaptive Threshold Learning (ATL), Field Oriented Control (FOC), block to patch map, geometry video data, and attribute video data, and occupancy video data.

As shown in FIG. 3, the rendering process includes the following six operations.

Operations of entity filtering (optional) and patch culling are performed in sequence, and then a pruned view reconstruction is performed. The entity filtering and patch culling belong to block to patch map filtering.

After an occupancy reconstruction is performed, a pruned view reconstruction is performed.

An attribute average value restoration (optional) and a geometric scaling (optional) are performed respectively, and then the pruned view reconstruction is performed. The occupancy reconstruction, pruned view reconstruction and attribute average value restoration belong to reconstruction processes.

After the pruned view reconstruction is performed, on the one hand, depth value decoding (optional) and depth estimation (optional) are performed; on the other hand, unproject reconstructed pruned views to global coordinate system (coord.sys) is performed. The geometric scaling, depth value decoding and depth estimation belong to geometry processes.

After the depth value decoding and depth estimation are performed, the unproject reconstructed pruned views to global coord.sys is also performed.

After the unproject reconstructed pruned views to global coord.sys is performed, operations of reprojecting and merging into a viewport are performed, then an inpainting and viewing space handling are performed in sequence, and finally the decoded picture is presented through the viewport.

The operations of the unproject reconstructed pruned views to global coord.sys and reprojecting and merging into a viewport belong to view synthesis, and the operations of inpainting and viewing space handling belong to viewport filtering.

The method for picture filling described in the following embodiments of the present disclosure belongs to operations in the viewing space handling in FIG. 3.

It should be noted that the framework of the MPEG immersive video system shown in FIG. 1 is only an exemplary description, and the method for picture filling or the decoding method described in the following embodiments of the present disclosure may also be applied to other MIV systems, which is not limited.

In related art, in MIV, a method for the hole filling currently adopted by the TMIV is a relatively simple pixel-by-pixel traversal interpolation method. The pixel-by-pixel traversal interpolation method is mainly implemented by the following flow.

An available pixel A, which is located on the same row as the pixel to be filled I and located on the left of and closest to the pixel to be filled I, is searched, and an available pixel B, which is located on the same row as the pixel to be filled I and located on the right of and closest to the pixel to be filled I, is searched.

By using pixel values of the available pixels A and B, a distance between the pixel to be filled I and the available pixel A and a distance between the pixel to be filled I and the available pixel B, a pixel value of the pixel to be filled I is calculated in a manner of linear weighting.

If the available pixels located on the left of and closest to the pixel to be filled I and located on the right of and closest to the pixel to be filled I are fixed to be selected as reference pixels, the way of selecting the reference pixels will be too fixed and inflexible. Because a hole in MIV appears mostly in a periphery region of the object having shallow depths, this characteristic of the hole leads to that for the pixels inside the hole, only a part of the pixels in the periphery region of the hole have reference value. The remaining pixels in the periphery region of the hole have no reference value, and may even mislead the hole filling results. Therefore, only part of the pixels in the periphery region of the hole should be selected as the reference pixels, and the remaining pixels in the periphery region of the hole should not be selected as the reference pixels.

In addition, the hole filling can also be performed based on the deep learning, and the problem of the picture hole filling can be regarded as learning an problem of end-to-end mapping from occluded input to complete output. For example, the convolution neural network is introduced to build the basic model of neural network, and the neural network is trained by a large amount of data sets, so that the trained neural network can generate new contents in the picture hole region. However, the method for hole filling based on the deep learning also has the problems that the way of selecting the reference pixels is too fixed and inflexible.

In related art, only two pixels are used as reference objects for performing the hole filling for each pixel to be filled, but the manner of only taking two pixels as the reference pixels will result in a small number of reference pixels, so that it is impossible to fully refer to the pixel value relationship between pixels in the periphery region outside the hole, and it is difficult to reconstruct the high-frequency texture features in the horizontal direction inside the hole region. Therefore, it is difficult to repair the hole to represent the detailed and realistic texture.

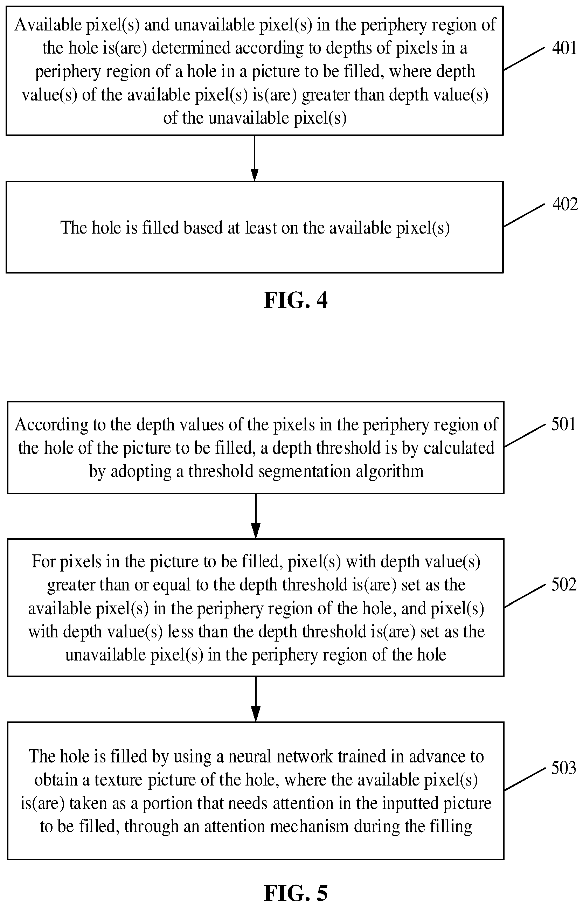

Some embodiments of the present disclosure provide a method for picture filling, and in an exemplary embodiment, as shown in FIG. 4, the method includes operations 401 to 402.

In operation 401, available pixel(s) and unavailable pixel(s) in the periphery region of the hole is(are) determined according to depths of pixels in a periphery region of a hole in a picture to be filled, where depth value(s) of the available pixel(s) is(are) greater than depth value(s) of the unavailable pixel(s).

In operation 402, the hole is filled based at least on the available pixel(s).

The operation that the hole is filled based at least on the available pixel(s) includes one or more of the following manners.

The hole is filled based on the available pixel(s).

The hole is filled based on the available pixel(s) and the unavailable pixel(s).

The hole is filled based on the available pixel(s) and the unavailable pixel(s), and weight(s) assigned to the unavailable pixel(s) is(are) less than weight(s) assigned to the available pixel(s) during the filling.

In an exemplary embodiment, the unavailable pixel(s) is(are) shield during the filling or weight(s) assigned to the unavailable pixel(s) is(are) less than weight(s) assigned to the available pixel(s) during the filling.

The operation of shielding means that the hole is filled without using the unavailable pixel(s) during filling.

In an exemplary embodiment, the picture to be filled is a sub-block picture partitioned from an original picture including a plurality of holes, and the sub-block picture includes the hole.

In an exemplary embodiment, the operation that the available pixel(s) and unavailable pixel(s) in the periphery region of the hole is(are) determined according to depths of pixels in a periphery region of the hole in the picture to be filled includes the following two operations.

According to the depth values of the pixels in the periphery region of the hole, a depth threshold is calculated by adopting a threshold segmentation algorithm.

For pixels in the picture to be filled or for pixels in the peripheral region of the hole, pixel(s) with depth value(s) greater than or equal to the depth threshold is(are) set as the available pixel(s), and pixel(s) with depth value(s) less than the depth threshold is(are) set as the unavailable pixel(s).

In an exemplary embodiment, the peripheral region of the hole is a region formed by candidate pixels, and the candidate pixels are obtained by following operations.

An expansion operation is performed on a hole region, corresponding to the hole, in a hole mask picture of the hole.

An XOR operation is performed on a picture obtained by performing the expansion operation and the hole mask picture of the hole, and pixels obtained by performing the XOR operation are taken as candidate pixels.

The hole mask picture of the hole is a sub-block picture partitioned from a hole mask picture corresponding to an original picture including a plurality of holes, and the sub-block picture includes the hole.

In an exemplary embodiment, the operation that the hole is filled based at least on the available pixel(s) includes the following operation.

The hole is filled by using a neural network trained in advance to obtain a texture picture of the hole. The available pixel(s) is(are) taken as a portion that needs attention in the inputted picture to be filled, through an attention mechanism during the filling. In an exemplary embodiment, the operation that the available pixel(s) is(are) taken as a portion that needs attention in the inputted picture to be filled, through the attention mechanism is implemented in following one or more of the following manners. A point multiplication operation is performed, by element position, between a hole peripheral availability template picture for indicating the available pixel(s) and an input tensor of the neural network, to shield element(s) in the input tensor and corresponding to the unavailable pixel(s).

A point multiplication operation is performed, by the element position, between a feature map obtained by performing a convolution operation on the available pixel(s) and a feature map of front M layer(s) obtained by processing of the neural network.

A value of M is a subset of {1, 2, 3 ... N-1}, and the input tensor is a tensor obtained by cascading the picture to be filled and the hole mask picture of the hole.

In an exemplary embodiment, the neural network is a neural network obtained by training a preset neural network through hole filling samples. An picture to be filled, a hole mask picture and a hole peripheral availability template picture that are corresponding to the hole are taken as inputs, and the texture picture corresponding to the picture to be filled is taken as the output. The hole filling samples are multiple holes on which the picture to be filled, the hole mask picture, the hole peripheral availability template picture and the real picture all corresponding to the hole have been respectively marked.

In an exemplary embodiment, the operation that the hole is filled by using the neural network trained in advance to obtain the texture picture of the hole is implemented by the following operations.

The picture to be filled of the hole and the hole mask picture of the hole are cascaded to obtain a first C channel tensor, where C is an integer greater than or equal to 1. A point multiplication operation is performed, by element position, between a hole peripheral availability template picture of the hole and the first C channel tensor to obtain a second C channel tensor. The second C channel tensor is inputted into the neural network to be subjected to a convolution processing, and the picture outputted by the neural network is taken as the texture picture of the hole.

The picture to be filled of the hole, the hole mask picture of the hole and the hole peripheral availability template picture of the hole are cascaded to obtain a third C channel tensor, where C is an integer greater than or equal to 1. The third C channel tensor is inputted into the neural network to be subjected to the convolution processing, and the picture outputted by the neural network is taken as the texture picture of the hole.

In the convolution processing, an availability feature map is obtained by performing convolution on the hole peripheral availability template picture in the hole filling samples, and a feature map obtained by performing, between the availability feature map and a feature map outputted by front M convolution layer(s), a point multiplication operation by element position is taken as the input of the front M+1 convolution layers. A value of M is a subset of {1, 2, 3 ... N-1}, N is the number of convolution layers included in the neural network, and N is an odd number greater than or equal to 3.

In an exemplary embodiment, the method further includes the following operation.

The preset neural network is trained by using the hole filling samples to obtain the neural network, which includes the following operation.

The following operations are performed on each of the hole filling samples.

The picture to be filled and the hole mask picture in the hole filling samples are cascaded to obtain a first C channel tensor, where C is an integer greater than or equal to 1. A point multiplication operation is performed, by element position, between a hole peripheral availability template picture in the hole filling samples and the first C channel tensor to obtain a second C channel tensor. The second C channel tensor is inputted into the neural network to be subjected to a convolution processing.

Optionally, the picture to be filled, the hole mask picture and the hole peripheral availability template picture in the hole filling samples are cascaded to obtain a third C channel tensor, where C is an integer greater than or equal to 1. The third C channel tensor is inputted into the neural network to be subjected to the convolution processing.

The picture outputted by the neural network is compared with the real picture in the hole filling samples, and the neural network is continued to be trained according to the comparison result.

In the convolution processing, a availability feature map is obtained by performing convolution on the hole peripheral availability template picture in the hole filling samples, and a feature map obtained by performing, between the availability feature map and a feature map outputted by front M convolution layer(s), a point multiplication operation by element position is taken as the input of the front M+1 convolution layers. A value of M is a subset of {1, 2, 3 ... N-1}, N is the number of convolution layers included in the neural network, and N is an odd number greater than or equal to 3.

In an exemplary embodiment, the value of M is {1, 2}.

In an exemplary embodiment, the operation that the hole is filled based at least on the available pixel(s) includes the following operation.

For each pixel to be filled of the hole, the following operations are performed respectively.

Available pixel(s) in a same row as the pixel to be filled is(are) determined, and the pixel to be filled is filled based on texture value(s) of the determined available pixel(s).

Optionally, available pixel(s) and unavailable pixel(s) in a same row as the pixel to be filled are determined, and the pixel to be filled is filled based on texture values of the determined available pixel(s) and unavailable pixel(s), where weight(s) assigned to the texture value(s) of the unavailable pixel(s) is(are) less than weight(s) assigned to the texture value(s) of the available pixel(s).

In this example, hole filling is not only performed according to the available pixels on the left and right of the pixel to be filled, but the hole in the picture to be filled is filled based at least on the available pixel(s), so that the high-frequency texture features in the horizontal direction inside the hole region can be well reconstructed, and thus the hole can be repaired to represent a detailed and realistic texture.

Some embodiments of the present disclosure provide a method for picture filling, in an exemplary embodiment, as shown in FIG. 5, the method includes operations 501 to 503.

In operation 501, according to the depth values of the pixels in the periphery region of the hole of the picture to be filled, a depth threshold is by calculated adopting a threshold segmentation algorithm.

In operation 502, for pixels in the picture to be filled, pixel(s) with depth value(s) greater than or equal to the depth threshold is(are) set as the available pixel(s) in the periphery region of the hole, and pixel(s) with depth value(s) less than the depth threshold is(are) set as the unavailable pixel(s) in the periphery region of the hole.

In operation 503, the hole is filled by using a neural network trained in advance to obtain a texture picture of the hole, where the available pixel(s) is(are) taken as a portion that needs attention in the inputted picture to be filled, through an attention mechanism during the filling.

In an exemplary embodiment, the picture to be filled is a sub-block picture partitioned from an original picture including a plurality of e holes, and the sub-block picture includes the hole.

In an exemplary embodiment, the original picture includes an original texture picture to be filled and an original depth picture to be filled that both correspond to one frame of picture of virtual view pictures. The picture to be filled includes a texture picture to be filled and a depth picture to be filled. The texture picture to be filled is a texture sub-block picture partitioned from original texture picture to be filled including a plurality of holes, and the texture sub-block picture includes the hole. The depth picture to be filled is a depth sub-block picture partitioned from the original depth picture to be filled including a plurality of holes, and the depth sub-block picture includes the hole.

In an exemplary embodiment, the virtual view pictures corresponding to the real picture may be obtained by performing a virtual view synthesis on the real picture. The picture processing is performed on one frame of picture of the virtual view pictures to obtain the original picture to be filled and the hole mask picture that both correspond to this frame of picture. The original picture to be filled includes the original texture picture to be filled and the original depth picture to be filled.

In an exemplary embodiment, the operation of performing the virtual view synthesis on the real picture may be accomplished by using any of the existing view synthesis algorithms, such as a forward mapping algorithm, a reverse mapping algorithm, and the like, which is not limited herein. The real picture is a picture obtained by shooting the same object simultaneously by at least two cameras on the left and right of the object in the immersive video application. Any of the existing algorithms can be used for performing the picture processing on the virtual view pictures, which is not limited herein.

In an exemplary embodiment, the original texture picture to be filled includes two types of regions. One type of region is called an available region. Pixels in this region are all available pixels and the pixel values of these pixels represent the real texture values of the pixels. The other type of region is called hole region. Pixels in this region are all unavailable pixels and the pixel values of these pixels should be lost and can be replaced by 0. These pixels are presented as a black region in the picture.

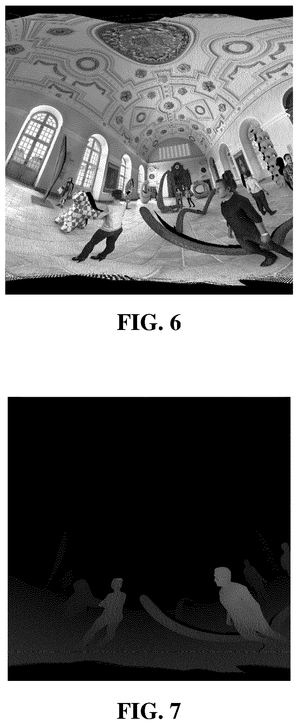

In an exemplary embodiment, the original texture picture to be filled is shown in FIG. 6, the pixels in the available region are all available pixels, and the pixel values of these pixels represent the real texture values of the pixels. The pixels in the hole region are all unavailable pixels and the pixel values of these pixels should be lost, and are replaced with 0 and represented as a black region in FIG. 6.

In an exemplary embodiment, at least one pixel of the texture picture to be filled is the available pixel(s) and at least one pixel of the texture picture to be filled that is different from the available pixel(s) is the unavailable pixel(s).

In an exemplary embodiment, the original depth picture to be filled also includes two types of regions. One type of region is called an available region, pixels in this region are all available pixels and the pixel values of these pixels represent the real texture values of the pixels. The other type of region is called hole region, pixels in this region are all unavailable pixels and the pixel values of these pixels should be lost and can be replaced by 0.

In an exemplary embodiment, the original depth picture to be filled is shown in FIG. 7, the pixels in the available region are all available pixels, and the pixel values of these pixels represent the real depth values of the pixels; and the pixels in the hole region are all unavailable pixels and the pixel values of these pixels should be lost and can be replaced with 0 in FIG. 7.

In an exemplary embodiment, at least one pixel of the texture picture to be filled is the available pixel(s) and at least one pixel of the texture picture to be filled that is different from the available pixel(s) is the unavailable pixel(s).

In an exemplary embodiment, the peripheral region of the hole is a region formed by candidate pixels, and the candidate pixels are obtained by following two operations.

An expansion operation is performed on a hole region, corresponding to the hole, in a hole mask picture of the hole.

An XOR operation is performed on a picture obtained by performing the expansion operation and the hole mask picture of the hole, and pixels obtained by performing the XOR operation are taken as candidate pixels.

The hole mask picture of the hole is a sub-block picture partitioned from a hole mask picture corresponding to an original picture including a plurality of holes, and the sub-block picture includes the hole.

In an exemplary embodiment, the hole mask picture is a binary picture and used for indicating the hole region in the original picture to be filled. For each original picture to be filled, there is a corresponding hole mask picture. The hole mask picture also includes two types of regions. One type of region corresponds to the hole region in the original picture to be filled, pixel values of the pixels in this type of region are 1 and this type of region is presented as a white region. Pixel values of the pixels in the other type of region are0 and this other type of region can be presented as a black region.

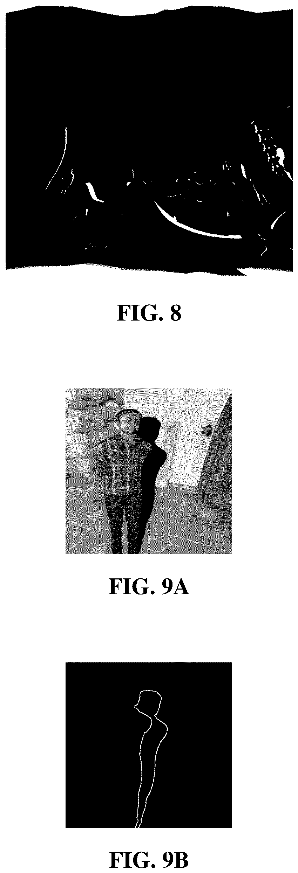

In an exemplary embodiment, the hole mask picture is shown in FIG. 8. In FIG. 8, one region in the hole mask picture corresponds to the hole region in the picture to be filled, pixel values of pixels in this region are1, and this region is presented as the white region in FIG. 8, pixel values of pixels in other regions are 0, and the other regions are presented as the black regions in FIG. 8.

In an exemplary embodiment, at least one pixel of the hole mask picture of the hole is the available pixel(s) and at least one pixel of the hole mask picture that is different from the available pixel(s) is the unavailable pixel(s).

In an exemplary embodiment, the hole mask picture of the hole may be acquired by the following three operations.

In the hole mask picture, connected domains, consist of lost pixels, are selected one by one according to a certain scanning sequence, and the connected domain is taken as a hole region.

A pixel located in the center of gravity of the hole region is taken as the center pixel.

In the hole mask picture, an picture with W pixels in width and height is intercepted by taking the center pixel as the center, and the intercepted picture is taken as the hole mask picture of the hole.

In an exemplary embodiment, the texture picture to be filled may be acquired by the following three operations.

In the hole mask picture corresponding to the texture picture to be filled, connected domains, consist of lost pixels, are selected one by one according to a certain scanning sequence, and the connected domain is taken as a hole region.

A pixel located in the center of gravity of the hole region is taken as the center pixel.

In the original texture picture to be filled, an picture with W pixels in width and height is intercepted by taking the center pixel as the center, and the intercepted picture is taken as the texture picture to be filled.

In an exemplary embodiment, the depth picture to be filled may be acquired by the following three operations.

In the hole mask picture corresponding to the depth picture to be filled, connected domains, consist of lost pixels, are selected one by one according to a certain scanning sequence, and the connected domain is taken as a hole region.

A pixel located in the center of gravity of the hole region is taken as the center pixel.

In the original depth picture to be filled, an picture with W pixels in width and height is intercepted by taking the center pixel as the center, and the intercepted picture is taken as the depth picture to be filled.

In an exemplary embodiment, W is 512.

In an exemplary embodiment, the value of W may be preset according to the size of each hole region. The hole mask picture, the texture picture to be filled and the depth picture to be filled of the hole obtained according to the preset value of M need to include at least one complete hole.

In an exemplary embodiment, any existing picture expansion algorithm may be employed to perform the expansion operation, which is not limited herein.

In an exemplary embodiment, the preset threshold segmentation algorithm may be any of the existing threshold segmentation algorithms, which is not limited herein.

In an exemplary embodiment, the preset threshold segmentation algorithm is a Otsu's method (also called maximum inter-class variance (OTSU) algorithm).

In an exemplary embodiment, the available(s) and unavailable pixel(s) in the periphery region of the hole may also be determined in the following manner.

For pixels in the peripheral region of the hole, pixel(s) with depth value(s) greater than or equal to the depth threshold is(are) set as the available pixel(s), and pixel(s) with depth value(s) less than the depth threshold is(are) set as the unavailable pixel(s).

In an exemplary embodiment, the operation that the available pixel(s) is(are) taken as a portion that needs attention in the inputted picture to be filled through the attention mechanism is implemented in following one or more of the following manners. A point multiplication operation is performed, by element position, between a hole peripheral availability template picture for indicating the available pixel(s) and an input tensor of the neural network, to shield element(s) in the input tensor and corresponding to the unavailable pixel(s).

A point multiplication operation is performed, by the element position, between a feature map obtained by performing a convolution operation on the available pixel(s) and a feature map of front M layer(s) obtained by processing of the neural network.

A value of M is a subset of {1, 2, 3 ... N-1}. N is the number of convolution layers included in the neural network. The input tensor is a tensor obtained by cascading the picture to be filled and the hole mask picture of the hole.

In an exemplary embodiment, the value of M is {1, 2}.

In an exemplary embodiment, the value of M may be preset according to a desired filling effect.

In an exemplary embodiment, the hole peripheral availability template picture is a reference region which can guide subsequent operations of the hole filling and is obtained by analyzing the hole mask picture and the depth picture to be filled. The reference region is represented in a form of a binary mask picture. The purpose of generating the hole peripheral availability template is to identify the region in the texture picture to be filled which can guide subsequent operations of the hole filling.

In an exemplary embodiment, the hole peripheral availability template picture also includes two types of regions. One type of region corresponds to the available pixel region in the depth picture to be filled, pixel values of pixels in this type of region may be set to 0 and the type of region is presented as a black region. The other type of region corresponds to the unavailable pixel region, pixel values of pixels in this type of region may be set to 1 and the region can be presented as a white region.

In this example, the depth picture to be filled and the hole mask picture are processed to obtain the hole peripheral availability template picture. The hole peripheral availability template picture identifies the reference region in the texture picture to be filled which have guiding significance for subsequent the hole filling, and is helpful to improve the quality of the complete target viewpoint picture obtained after the subsequent processing of the hole filling network.

In an exemplary embodiment, the hole may also be filled in the following manner.

The available pixel(s) and unavailable pixel(s) in the periphery region of the hole are introduced into a neural network trained in advance by an attention mechanism to fill the hole. The weight(s) assigned to the unavailable pixel(s) is(are) less than the weight(s) assigned to the available pixel(s) during the filling.

In an exemplary embodiment, the neural network is a neural network obtained by training a preset neural network through hole filling samples. A picture to be filled, a hole mask picture and a hole peripheral availability template picture that all correspond to the hole are taken as inputs, and the texture picture corresponding to the picture to be filled is taken as the output. The hole filling samples are a plurality of holes on which the picture to be filled, the hole mask picture, the hole peripheral availability template picture and the real picture all corresponding to the hole have been respectively marked.

In an exemplary embodiment, the operation that the hole is filled by using the neural network trained in advance is implemented by the following one or more manners.

The picture to be filled of the hole and the hole mask picture of the hole are cascaded to obtain a first C channel tensor, where C is an integer greater than or equal to 1.

A point multiplication operation is performed, by element position, between a hole peripheral availability template picture of the hole and first C channel tensor to obtain a second C channel tensor. The second C channel tensor is inputted into the neural network to perform a convolution processing, and the picture outputted by the neural network is taken as the texture picture of the hole

The picture to be filled of the hole, the hole mask picture of the hole and the hole peripheral availability template picture of the hole are cascaded to obtain a third C channel tensor, where C is an integer greater than or equal to 1. The third C channel tensor is inputted into the neural network to perform the convolution processing, and the picture outputted by the neural network is taken as the texture picture of the hole.

In an exemplary embodiment, during the convolution processing, in front (N-1)/2 convolution layers and the [(N1/2)+1]th convolution layers, a height and width of an output tensor of each convolution layer is half of the input tensor. In later (N-1)/2 convolution layers, a height and width of an output tensor of each convolution layer are twice that of the input tensor.

In the front (N-1)/2 convolution layers and the later (N-1)/2 convolution layers, tensors outputted by every two convolution layers having the same size are cascaded, and the cascaded tensor is taken as a feature map of the convolution layer located in the later (N-1)/2 convolution layers.

In the convolution processing, the availability feature map is obtained by performing convolution on the hole peripheral availability template picture in the hole filling samples, and the feature map obtained by performing, between the availability feature map and a feature map outputted by front M convolution layer(s), a point multiplication operation by element position is taken as the input of the front M+1 convolution layers. A value of M is a subset of {1, 2, 3 ... N-1}, N is the number of convolution layers included in the neural network, and N is an odd number greater than or equal to 3.

In an exemplary embodiment, the method further includes the following operation.

The preset neural network is trained by using the hole filling samples to obtain the neural network, which includes the following operation.

One or more of the following operations are performed on each of the hole filling samples.

The picture to be filled and the hole mask picture in the hole filling samples are cascaded to obtain a first C channel tensor, where C is an integer greater than or equal to 1. A point multiplication operation is performed, by element position, between a hole peripheral availability template picture in the hole filling samples and the first C channel tensor to obtain a second C channel tensor. The second C channel tensor is inputted into the neural network to be subjected to a convolution processing.

The picture to be filled, the hole mask picture and the hole peripheral availability template picture in the hole filling samples are cascaded to obtain a third C channel tensor, where C is an integer greater than or equal to 1. The third C channel tensor is inputted into the neural network to be subjected to the convolution processing.

The picture outputted by the neural network is compared with the real picture in the hole filling samples, and the neural network is continued to be trained according to the comparison result.

In an exemplary embodiment, during the convolution processing, in the front (N-1)/2 convolution layers and the [(N1/2)+1]th convolution layers, a height and width of an output tensor of each convolution layer is half of the input tensor. In later (N-1)/2 convolution layers, a height and width of an output tensor of each convolution layer are twice that of the input tensor.

In the front (N-1)/2 convolution layers and the later (N-1)/2 convolution layers, tensors, outputted by every two convolution layers, having the same size are cascaded, and the cascaded tensor is taken as a feature map of the convolution layer located in the later (N-1)/2 convolution layers.

In the convolution processing, the availability feature map is obtained by performing convolution on the hole peripheral availability template picture in the hole filling samples, and the feature map obtained by performing, between the availability feature map and a feature map outputted by front M convolution layer(s), a point multiplication operation by element position is taken as the input of the front M+1 convolution layers. A value of M is a subset of {1, 2, 3 ... N-1}, N is the number of convolution layers included in the neural network, and N is an odd number greater than or equal to 3.

In an exemplary embodiment, the value of N is 13.

In an exemplary embodiment the value of N may be preset for example according to a desired filling effect.

In an exemplary embodiment, the value of C is 5.

In an exemplary embodiment, the value of the C may be preset for example according to a desired filling effect.

In an exemplary embodiment, the hole may also be filled in the following manner.

For each pixel to be filled of the hole, the following two operations are performed respectively.

Available pixel(s) in a same row as the pixel to be filled is(are) determined, and the pixel to be filled is filled based on texture value(s) of the determined available pixel(s).

Optionally, available pixel(s) and unavailable pixel(s) in a same row as the pixel to be filled are determined, and the pixel to be filled is filled based on texture values of the determined available pixel(s) and unavailable pixel(s), where weight(s) assigned to the texture value(s) of the unavailable pixel(s) is(are) less than weight(s) assigned to the texture value(s) of the available pixel(s).

In the technical scheme provided by this example, the available pixels in the periphery region of the hole are added into the neural network in the form of attention mechanism, so that the neural network can explicitly refer to the pixels valuable for the hole filling.

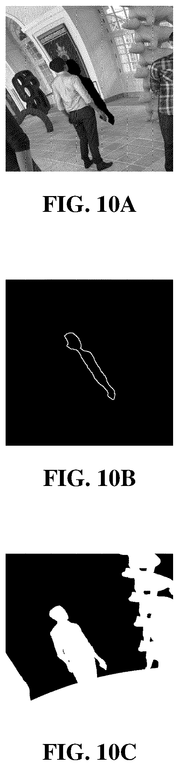

In an exemplary embodiment, the texture picture to be filled is shown in FIG. 9a or FIG. 10a.

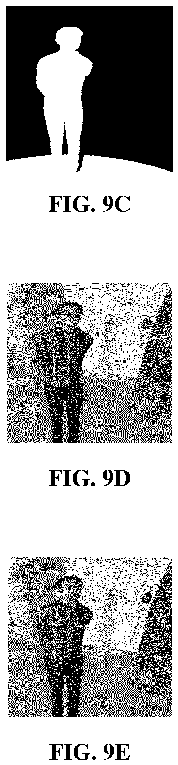

In an exemplary embodiment, corresponding to the hole in FIG. 9a, the obtained available pixels and unavailable pixels in the periphery region of the hole are shown in FIG. 9b and the obtained hole peripheral availability template picture is shown in FIG. 9c. Corresponding to the hole region in FIG. 10a, the obtained available pixels and unavailable pixels in the periphery region of the hole are shown in FIG. 10b and the obtained hole peripheral availability template picture is shown in FIG. 10c.

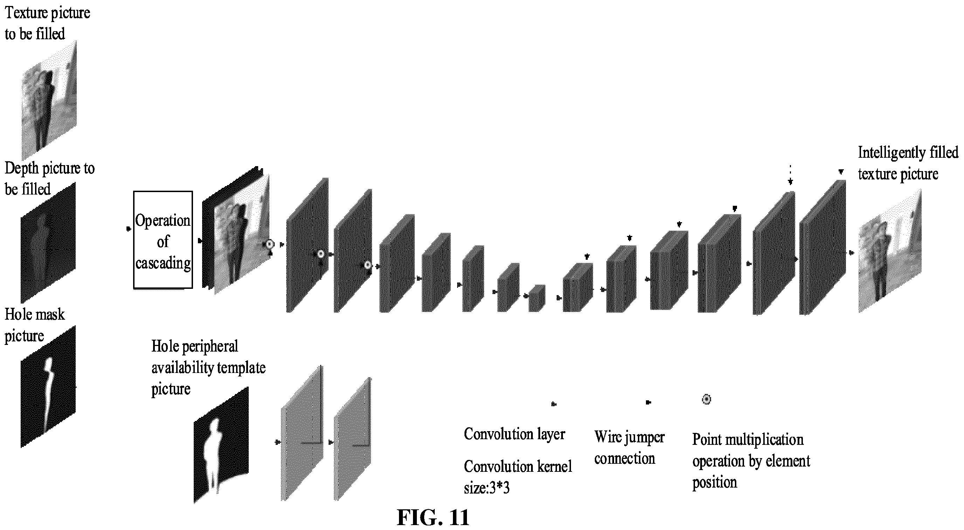

In an exemplary embodiment, FIG. 11 shows a neural network trained in advance including 13 convolution layers having a convolution kernel size of 3*3 and one fully connected layer.

Based on the neural network shown in FIG. 11, as shown in fig. 11, for the hole shown in FIG. 9a, the following three operations are performed.
1. The texture picture to be filled of the hole, the depth picture to be filled of the hole and the hole mask picture of the hole are cascaded to obtain a 5 channels tensor, and then the point multiplication operation is performed, by element position, between 5 channels tensor and the hole peripheral availability template picture in FG. 9c to obtain a new 5 channels tensor.
2, The new 5 channels tensor is inputted into the neural network to be subjected to the convolution processing. In the front 6 convolution layers and the 7th convolution layer, a height and width of an output tensor of each convolution layer is half of the input tensor. In later 6 convolution layers, a height and width of an output tensor of each convolution layer are twice that of the input tensor.

In the front 6 convolution layers and the later 6 convolution layers, tensors, outputted by every two convolution layers, having the same size are cascaded, and the cascaded tensor is taken as a feature map of the convolution layer located in the later 6 convolution layers.

In the convolution processing, the availability feature map is obtained by performing convolution on the hole peripheral availability template picture in the hole filling samples, and the feature map obtained by performing, between the availability feature map and a feature map outputted by front M convolution layer(s), a point multiplication operation by element position is taken as the input of the front M+1 convolution layers. A value of M is {1, 2}.

3. An intelligently filled texture picture is outputted and obtained.

In this example, the intelligently filled texture picture is shown in FIG. 9d and the real picture corresponding to the texture picture to be filled is shown in FIG. 9e. FIG. 9a is compared with FIG. 9d and FIG. 9e, it can be seen that after the hole is filled by the method for picture filling described in this example, the hole region is repaired to represent a detailed and realistic texture in the obtained texture picture, and the difference of the intelligently filled texture picture is very small compared with the real picture.

In this example, in order to better introduce the hole peripheral availability template picture, hole peripheral availability template picture, the texture picture to be filled, the depth picture to be filled and the hole mask picture are not sent to the neural network together in a manner of cascading, but the hole peripheral availability template picture is added into the neural network in the manner of attention mechanism. That is to say, 1. the hole peripheral availability template picture and the input tensor of the neural network are used to perform the point multiplication operation by element position; 2. the availability feature map obtained by performing convolution on the hole peripheral availability template picture and the feature map of the first and second layers obtained by the processing of the neural network are used to perform the point multiplication operation by the element position. By adding the hole peripheral availability template picture into the neural network in the manner of the attention mechanism, the neural network can explicitly refer to the information of the reference region (i.e., the hole peripheral availability template picture) valuable for the hole filling.

In this example, the hole peripheral availability template picture is introduced into the neural network, and the hole peripheral availability template picture is applied to the shallow features of the neural network in the manner of the attention mechanism, so that the neural network can effectively pay attention to the valuable reference region in the texture picture to be filled.

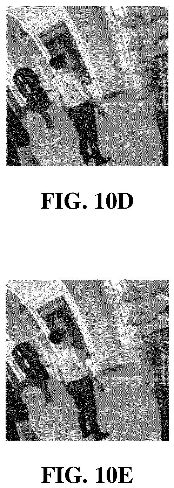

In an exemplary embodiment, for the hole region shown in FIG. 10a, after the hole is filled in the method for hole filling in FIG. 11, the obtained texture picture is shown in FIG. 10d; and the real picture corresponding to the sub-block texture picture to be filled shown in FIG. 10a is shown in FIG. 10e. FIG. 10a is compared with FIG. 10d and FIG. 10d, it can be seen that after the hole is filled by the method for picture filling described in this example, the hole region is repaired to represent a detailed and realistic texture in the obtained texture picture, and the difference of the sub-block texture picture to be filled is very small compared with the real picture.

The method for picture filling provided by some embodiments of the present disclosure can be performed after the view synthesis operation and repair the texture pattern of the uncoloured region in the texture picture obtained by the view synthesis, and can improve the picture quality of a single picture in the high-degree-of-freedom video.

The method for picture filling provided by some embodiments of the present disclosure can effectively reduce defects and artifacts in the target viewpoint picture finally presented to the viewer, and improve the subjective quality and objective of the target viewpoint picture.

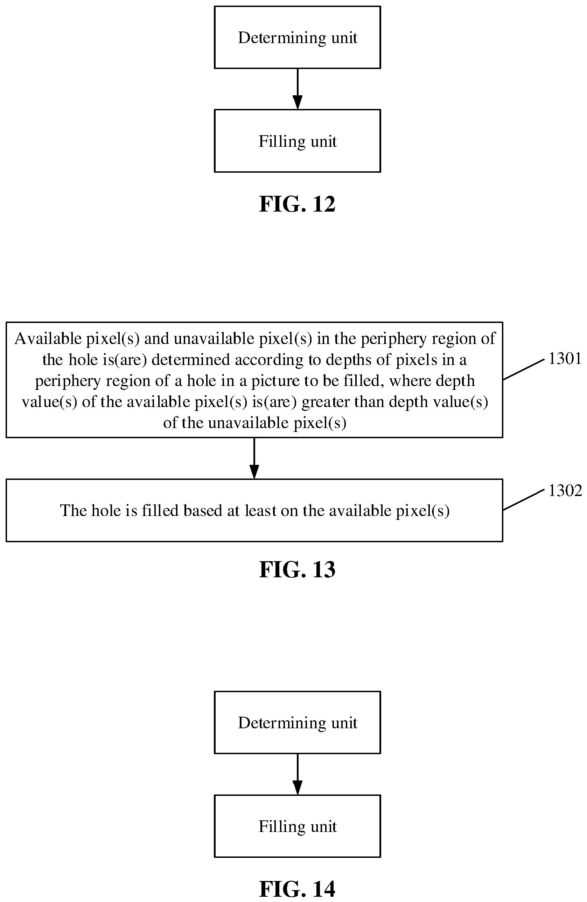

Some embodiments of the present disclosure provide a device for picture filling. In an exemplary embodiment, as shown in FIG. 12, the device for picture filling includes a determining unit and a filling unit.

The determining unit is configured to determine, according to depths of pixels in a periphery region of a hole in a picture to be filled, available pixel(s) and unavailable pixel(s) in the periphery region of the hole, where depth value(s) of the available pixel(s) is(are) greater than depth value(s) of the unavailable pixel(s).

The filling unit is configured to fill the hole based at least on the available pixel(s).

In an exemplary embodiment, the unavailable pixel(s) is(are) shield during the filling or weight(s) assigned to the unavailable pixel(s) is(are) less than weight(s) assigned to the available pixel(s) during the filling.

In an exemplary embodiment, the picture to be filled is a sub-block picture partitioned from an original picture including a plurality of holes, and the sub-block picture includes the hole.

In an exemplary embodiment, the determining unit is configured to calculate, according to the depth values of the pixels in the periphery region of the hole, a depth threshold by adopting a threshold segmentation algorithm.

For pixels in the picture to be filled or for pixels in the peripheral region of the hole, pixel(s) with depth value(s) greater than or equal to the depth threshold is(are) set as the available pixel(s), and pixel(s) with depth value(s) less than the depth threshold is(are) set as the unavailable pixel(s).

In an exemplary embodiment, the peripheral region of the hole is a region formed by candidate pixels, and the candidate pixels are obtained by following two operations.

An expansion operation is performed on a hole region, corresponding to the hole, in a hole mask picture of the hole.

An XOR operation is performed on a picture obtained by performing the expansion operation and the hole mask picture of the hole, and pixels obtained by performing the XOR operation are taken as candidate pixels.

The hole mask picture of the hole is a sub-block picture partitioned from a hole mask picture corresponding to an original picture including a plurality of holes, and the sub-block picture includes the hole.

In an exemplary embodiment, the filling unit is configured to fill the hole by using a neural network trained in advance to obtain a texture picture of the hole, where the available pixel(s) is(are) taken as a portion that needs attention in the inputted picture to be filled, through an attention mechanism during the filling.

In an exemplary embodiment, the filling unit is configured to implement the operation that the available pixel(s) is(are) taken as a portion that needs attention in the inputted picture to be filled, through the attention mechanism in one or more of the following manners. A point multiplication operation is performed, by element position, between a hole peripheral availability template picture for indicating the available pixel(s) and an input tensor of the neural network, to shield element(s) in the input tensor and corresponding to the unavailable pixel(s).

A point multiplication operation is performed, by the element position, between a feature map obtained by performing a convolution operation on the available pixel(s) and a feature map of front M layer(s) obtained by processing of the neural network.

The value of M is a subset of {1, 2, 3 ... N-1}, and the input tensor is a tensor obtained by cascading the picture to be filled and the hole mask picture of the hole.

In an exemplary embodiment, the neural network is a neural network obtained by training a preset neural network through hole filling samples. A picture to be filled, a hole mask picture and a hole peripheral availability template picture that all correspond to the hole are taken as inputs, and the texture picture corresponding to the picture to be filled is taken as the output. The hole filling samples are a plurality of holes on which the picture to be filled, the hole mask picture, the hole peripheral availability template picture and the real picture all corresponding to the hole have been respectively marked.

In an exemplary embodiment, the filling unit is configured to fill the hole by using the neural network trained in advance to obtain a texture picture of the hole in one or more of the following ways.

The picture to be filled of the hole and the hole mask picture of the hole are cascaded to obtain a first C channel tensor, where C is an integer greater than or equal to 1. A point multiplication operation is performed, by element position, between a hole peripheral availability template picture of the hole and first C channel tensor to obtain a second C channel tensor. The second C channel tensor is inputted into the neural network to perform a convolution processing, and the picture outputted by the neural network is taken as the texture picture of the hole.

The picture to be filled of the hole, the hole mask picture of the hole and the hole peripheral availability template picture of the hole are cascaded to obtain a third C channel tensor, where C is an integer greater than or equal to 1. The third C channel tensor is inputted into the neural network to perform the convolution processing, and the picture outputted by the neural network is taken as the texture picture of the hole.

In the convolution processing, a availability feature map is obtained by performing convolution on the hole peripheral availability template picture in the hole filling samples, and a feature map obtained by performing, between the availability feature map and a feature map outputted by front M convolution layer(s), a point multiplication operation by element position is taken as the input of the front M+1 convolution layers. A value of M is a subset of {1, 2, 3 ... N-1}, N is the number of convolution layers included in the neural network, and N is an odd number greater than or equal to 3.

In an exemplary embodiment, the device further includes a training unit.

The training unit is configured to train the preset neural network by using the hole filling samples to obtain the neural network.

The following two operations are performed on each of the hole filling samples.

The picture to be filled in the hole filling samples and the hole mask picture of the hole are cascaded to obtain a first C channel tensor, where C is an integer greater than or equal to 1. A point multiplication operation is performed, by element position, between a hole peripheral availability template picture in the hole filling samples and first C channel tensor to obtain a second C channel tensor. The second C channel tensor is inputted into the neural network to perform a convolution processing.

Optionally, the picture to be filled, the hole mask picture and the hole peripheral availability template picture in the hole filling samples are cascaded to obtain a third C channel tensor, where C is an integer greater than or equal to 1. The third C channel tensor is inputted into the neural network to be subjected to the convolution processing.

The picture outputted by the neural network is compared with the real picture in the hole filling samples, and the neural network is continued to be trained according to the comparison result.

In the convolution processing, a availability feature map is obtained by performing convolution on the hole peripheral availability template picture in the hole filling samples, and a feature map obtained by performing, between the availability feature map and a feature map outputted by front M convolution layer(s), a point multiplication operation by element position is taken as the input of the front M+1 convolution layers. A value of M is a subset of {1, 2, 3 ... N-1}, N is the number of convolution layers included in the neural network, and N is an odd number greater than or equal to 3.

In an exemplary embodiment, the value of M is {1, 2}.

In an exemplary embodiment, the filling unit is configured to respectively perform the following operations for each pixel to be filled in the hole.

Available pixel(s) in a same row as the pixel to be filled is(are) determined, and the pixel to be filled is filled based on texture value(s) of the determined available pixel(s).

Optionally, available pixel(s) and unavailable pixel(s) in a same row as the pixel to be filled are determined, and the pixel to be filled is filled based on texture values of the determined available pixel(s) and unavailable pixel(s), where weight(s) assigned to the texture value(s) of the unavailable pixel(s) is(are) less than weight(s) assigned to the texture value(s) of the available pixel(s).

In this example, hole filling is not only performed according to the available pixels on the left and right of the pixel to be filled, but the hole in the picture to be filled is filled based at least on the available pixels, so that the high-frequency texture features in the horizontal direction inside the hole region can be well reconstructed, and thus the hole can be repaired to represent a detailed and realistic texture.

Some embodiments of the present disclosure provide a decoding method, as shown in FIG. 13, decoding method includes operations 1301 to 1302.

In operation 1301, available pixel(s) and unavailable pixel(s) in the periphery region of the hole is(are) determined according to depths of pixels in a periphery region of a hole in a picture to be filled, where depth value(s) of the available pixel(s) is(are) greater than depth value(s) of the unavailable pixel(s).

In operation 1302, the hole is filled based at least on the available pixel(s).

The picture to be filled is a picture acquired from an original picture obtained by performing video decoding on an encoded picture.

In an exemplary embodiment, the unavailable pixel(s) is(are) shield during the filling or weight(s) assigned to the unavailable pixel(s) is(are) less than weight(s) assigned to the available pixel(s) during the filling.

In an exemplary embodiment, the picture to be filled is acquired by following three operations.

The video decoding is performed on the encoded picture to obtain the original picture.

The original picture including a plurality of holes is partitioned to obtain a sub-block picture, and the sub-block picture includes the hole.

The sub-block picture is taken as the picture to be filled.

In an exemplary embodiment, the operation that the available pixel(s) and unavailable pixel(s) in the periphery region of the hole is(are) determined according to depths of pixels in a periphery region of the hole in the picture to be filled includes the following two operations.

A depth threshold is calculated by adopting a threshold segmentation algorithm according to the depth values of the pixels in the periphery region of the hole.

For pixels in the picture to be filled or for pixels in the peripheral region of the hole, pixel(s) with depth value(s) greater than or equal to the depth threshold is(are) set as the available pixel(s), and pixel(s) with depth value(s) less than the depth threshold is(are) set as the unavailable pixel(s).

In an exemplary embodiment, the peripheral region of the hole is a region formed by candidate pixels, and the candidate pixels are obtained by following two operations.

An expansion operation is performed on a hole region, corresponding to the hole, in a hole mask picture of the hole.

An XOR operation is performed on a picture obtained by performing the expansion operation and the hole mask picture of the hole, and pixels obtained by performing the XOR operation are taken as candidate pixels.

The hole mask picture of the hole is a sub-block picture partitioned from a hole mask picture corresponding to an original picture including multiple holes, and the sub-block picture includes the hole.

In an exemplary embodiment, the operation that the hole is filled based at least on the available pixel(s) includes the following operation.

The hole is filled by using a neural network trained in advance to obtain a texture picture of the hole. The available pixel(s) is(are) taken as a portion that needs attention in the inputted picture to be filled, through an attention mechanism during the filling.

In an exemplary embodiment, the operation that the available pixel(s) is(are) taken as a portion that needs attention in the inputted picture to be filled, through the attention mechanism is implemented in following one or more of the following manners.

A point multiplication operation is performed, by element position, between a hole peripheral availability template picture for indicating the available pixel(s) and an input tensor of the neural network, to shield element(s) in the input tensor and corresponding to the unavailable pixel(s).

A point multiplication operation is performed, by the element position, between a feature map obtained by performing a convolution operation on the available pixel(s) and a feature map of front M layer(s) obtained by processing of the neural network.

A value of M is a subset of { 1, 2, 3 ... N-1}, and the input tensor is a tensor obtained by cascading the picture to be filled and the hole mask picture of the hole.

In an exemplary embodiment, the operation that the hole is filled based at least on the available pixel(s) includes the following operation.

For each pixel to be filled of the hole, the following two operations are performed respectively.

Available pixel(s) in a same row as the pixel to be filled is(are) determined, and the pixel to be filled is filled based on texture value(s) of the determined available pixel(s).

Optionally, available pixel(s) and unavailable pixel(s) in a same row as the pixel to be filled are determined, and the pixel to be filled is filled based on texture values of the determined available pixel(s) and unavailable pixel(s), where weight(s) assigned to the texture value(s) of the unavailable pixel(s) is(are) less than weight(s) assigned to the texture value(s) of the available pixel(s).

Some embodiments of the present disclosure provide a decoding method, in an exemplary embodiment, the method includes the following operation.

The picture to be filled is filled by adopting the method for picture filling described in any of the above examples.

The picture to be filled is a picture acquired from an original picture obtained by performing a video decoding on an encoded picture.

In an exemplary embodiment, before the picture to be filled is filled by adopting the method for picture filling described in any of the above examples, the method further the following three operations.

The video decoding is performed on the encoded picture.

The original picture including a plurality of holes is partitioned to obtain a sub-block picture, and the sub-block picture includes the hole.

The sub-block picture is taken as the picture to be filled.

In an exemplary embodiment, after the picture to be filled is filled by adopting the method for picture filling described in any of the above examples, the method further includes the following operation.

The filled picture is taken as the decoded picture.

Some embodiments of the present disclosure provide a decoding device, in an exemplary embodiment, as shown in FIG. 14, the decoding device includes determining unit and a filling unit.

The determining unit is configured to determine, according to depths of pixels in a periphery region of a hole in a picture to be filled, available pixel(s) and unavailable pixel(s) in the periphery region of the hole, where depth value(s) of the available pixel(s) is(are) greater than depth value(s) of the unavailable pixel(s).

The filling unit is configured to fill the hole based at least on the available pixel(s).

The picture to be filled is a picture acquired from an original picture obtained by performing video decoding on an encoded picture.

In an exemplary embodiment, the unavailable pixel(s) is(are) shield during the filling or weight(s) assigned to the unavailable pixel(s) is(are) less than weight(s) assigned to the available pixel(s) during the filling.

In an exemplary embodiment, the device further includes an acquiring unit configured to acquire the picture to be filled by the following three manners.

The video decoding is performed on the encoded picture to obtain the original picture.

The original picture including a plurality of holes is partitioned to obtain a sub-block picture, and the sub-block picture includes the hole.

The sub-block picture is taken as the picture to be filled.

In an exemplary embodiment, the determining unit is configured to calculate, according to the depth values of the pixels in the periphery region of the hole, a depth threshold by adopting a threshold segmentation algorithm.

For pixels in the picture to be filled or for pixels in the peripheral region of the hole, pixel(s) with depth value(s) greater than or equal to the depth threshold is(are) set as the available pixel(s), and pixel(s) with depth value(s) less than the depth threshold is(are) set as the unavailable pixel(s).

In an exemplary embodiment, the peripheral region of the hole is a region formed by candidate pixels, and the candidate pixels are obtained by following two operations.

An expansion operation is performed on a hole region, corresponding to the hole, in a hole mask picture of the hole.

An XOR operation is performed on a picture obtained by performing the expansion operation and the hole mask picture of the hole, and pixels obtained by performing the XOR operation are taken as candidate pixels.

The hole mask picture of the hole is a sub-block picture partitioned from a hole mask picture corresponding to an original picture including multiple holes, and the sub-block picture includes the hole.

In an exemplary embodiment, the filling unit is configured to fill the hole by using a neural network trained in advance to obtain a texture picture of the hole. The available pixel(s) is(are) taken as a portion that needs attention in the inputted picture to be filled, through an attention mechanism during the filling.

In an exemplary embodiment, the operation that the available pixel(s) is(are) taken as a portion that needs attention in the inputted picture to be filled, through the attention mechanism is implemented in following one or more of the following manners.

A point multiplication operation is performed, by element position, between a hole peripheral availability template picture for indicating the available pixel(s) and an input tensor of the neural network, to shield element(s) in the input tensor and corresponding to the unavailable pixel(s).

A point multiplication operation is performed, by the element position, between a feature map obtained by performing a convolution operation on the available pixel(s) and front a feature map of M layer(s) obtained by processing of the neural network.

A value of M is a subset of {1, 2, 3 ... N-1}, and the input tensor is a tensor obtained by cascading the picture to be filled and the hole mask picture of the hole.

In an exemplary embodiment, the filling unit is configured to respectively perform the following operations for each pixel to be filled of the hole.

Available pixel(s) in a same row as the pixel to be filled is(are) determined, and the pixel to be filled is filled based on texture value(s) of the determined available pixel(s).

Optionally, available pixel(s) and unavailable pixel(s) in a same row as the pixel to be filled are determined, and the pixel to be filled is filled based on texture values of the determined available pixel(s) and unavailable pixel(s), where weight(s) assigned to the texture value(s) of the unavailable pixel(s) is(are) less than weight(s) assigned to the texture value(s) of the available pixel(s).

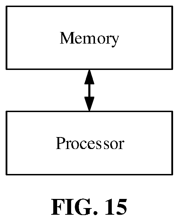

Some embodiments of the present disclosure provide an electronic device, in an exemplary embodiment, as shown in FIG. 15, the electronic device includes: a memory and a processor.

Computer programs executable on the processor are stored in the memory, where the processor is configured to implement the method for picture filling or the decoding method of any of the above examples when executing the computer programs.

Some embodiments of the present disclosure also provide a computer-readable storage medium having stored thereon computer programs that, when executed by a processor, cause the processor to implement the method for picture filling f any of the above examples, or implement the decoding method of any of the above examples.

Those of ordinary skill in the art will appreciate that all or some of the steps, systems, and functional modules/units in the above disclosed methods may be implemented as software, firmware, hardware, and appropriate combinations thereof. In hardware implementations, the division between functional modules/units mentioned in the above description does not necessarily correspond to the division of physical components. For example, a physical component may have multiple functions or a function or step may be performed cooperatively by several physical components. Some or all of the components may be implemented as software executed by a processor, such as a digital signal processor or a microprocessor, or as hardware, or as an integrated circuit, such as an application specific integrated circuit. Such software may be distributed on computer-readable media including computer storage media (or non-transient media) and communication media (or transient media). As is well known to those of ordinary skill in the art, the term computer storage medium includes volatile and non-volatile, removable and non-removable media implemented in any method or technique for storing information, such as computer-readable instructions, data structures, program modules, or other data. Computer storage media include, but are not limited to, random access memory (RAM), read-only memory (ROM), erasable Prom (EPROM), flash memory or other memory technology, CD-ROM, digital versatile disk (DVD) or other optical disk storage, magnetic cartridges, magnetic tapes, magnetic disk storage or other magnetic storage devices, or any other media used for storing desired information and accessed by a computer. In addition, it is well known to those of ordinary skill in the art that communication media typically contain computer readable instructions, data structures, program modules, or other data in modulated data signals such as carrier or other transmission mechanisms, and may include any information delivery medium.

## Claims

1. A method for picture filling, comprising:
determining, according to depths of pixels in a periphery region of a hole in a picture to be filled, available pixel(s) and unavailable pixel(s) in the periphery region of the hole, wherein depth value(s) of the available pixel(s) is(are) greater than depth value(s) of the unavailable pixel(s); and
filling the hole based at least on the available pixel(s).

2. The method for picture filling of claim 1, wherein the unavailable pixel(s) is(are) shield during the filling or weight(s) assigned to the unavailable pixel(s) is(are) less than weight(s) assigned to the available pixel(s) during the filling.

3. The method for picture filling of claim 1, wherein the picture to be filled is a sub-block picture partitioned from an original picture comprising a plurality of holes, and the sub-block picture comprises the hole.

4. The method for picture filling method claim 1, wherein determining, according to the depths of the pixels in the periphery region of the hole in the picture to be filled, the available pixel(s) and the unavailable pixel(s) in the periphery region of the hole comprises:
calculating, according to the depth values of the pixels in the periphery region of the hole, a depth threshold by adopting a threshold segmentation algorithm; and
for pixels in the picture to be filled or for pixels in the peripheral region of the hole, setting pixel(s) with depth value(s) greater than or equal to the depth threshold as the available pixel(s), and setting pixel(s) with depth value(s) less than the depth threshold as the unavailable pixel(s).

5. The method for picture filling of claim 1, wherein the peripheral region of the hole is a region formed by candidate pixels, and the candidate pixels are obtained by following operations:
performing an expansion operation on a hole region, corresponding to the hole, in a hole mask picture of the hole;
performing an XOR operation on a picture obtained by performing the expansion operation and the hole mask picture of the hole, and taking pixels obtained by performing the XOR operation as candidate pixels,
wherein the hole mask picture of the hole is a sub-block picture partitioned from a hole mask picture corresponding to an original picture comprising a plurality of holes, and the sub-block picture comprises the hole.

6. The method for picture filling of claim 1, wherein filling the hole based at least on the available pixel(s) comprises:
filling the hole by using a neural network trained in advance to obtain a texture picture of the hole, wherein the available pixel(s) is(are) taken as a portion that needs attention in the inputted picture to be filled, through an attention mechanism during the filling.

7. The method for picture filling of claim 6, wherein the operation that the available pixel(s) is(are) taken as a portion that needs attention in the inputted picture to be filled, through the attention mechanism is implemented in following one or more manners:
performing, between a hole peripheral availability template picture for indicating the available pixel(s) and an input tensor of the neural network, a point multiplication operation by element position, to shield element(s) in the input tensor and corresponding to the unavailable pixel(s); and
performing, between a feature map obtained by performing a convolution operation on the available pixel(s) and a feature map of front M layer(s) obtained by processing of the neural network, point multiplication operation by the element position,
wherein a value of M is a subset of {1, 2, 3 ... N-1}, and the input tensor is a tensor obtained by cascading the picture to be filled and the hole mask picture of the hole.

8. The method for picture filling of claim 1, wherein filling the hole based at least on the available pixel(s) comprises:
performing, for each pixel to be filled in the hole, following operations respectively:
determining available pixel(s) in a same row as the pixel to be filled, and filling the pixel to be filled based on texture value(s) of the determined available pixel(s); or
determining available pixel(s) and unavailable pixel(s) in a same row as the pixel to be filled, and filling the pixel to be filled based on texture values of the determined available pixel(s) and unavailable pixel(s), wherein weight(s) assigned to the texture value(s) of the unavailable pixel(s) is(are) less than weight(s) assigned to the texture value(s) of the available pixel(s).

9. A device for picture filling, comprising:
a determining unit, configured to determine, according to depths of pixels in a periphery region of a hole in a picture to be filled, available pixel(s) and unavailable pixel(s) in the periphery region of the hole, wherein depth value(s) of the available pixel(s) is(are) greater than depth value(s) of the unavailable pixel(s); and
a filling unit, configured to fill the hole based at least on the available pixel(s).

10. A decoding method, comprising:
determining, according to depths of pixels in a periphery region of a hole in a picture to be filled, available pixel(s) and unavailable pixel(s) in the periphery region of the hole, wherein depth value(s) of the available pixel(s) is(are) greater than depth value(s) of the unavailable pixel(s); and
filling the hole based at least on the available pixel(s),
wherein the picture to be filled is a picture acquired from an original picture obtained by performing video decoding on an encoded picture.

11. The decoding method of claim 10, wherein the unavailable pixel(s) is(are) shield during the filling or weight(s) assigned to the unavailable pixel(s) is(are) less than weight(s) assigned to the available pixel(s) during the filling.

12. The decoding method of claim 10, wherein the picture to be filled is acquired by following operations:
performing the video decoding on the encoded picture to obtain the original picture;
partitioning the original picture comprising a plurality of holes to obtain a sub-block picture, and the sub-block picture comprises the hole; and
taking the sub-block picture as the picture to be filled.

13. The decoding method of claim 10, wherein determining, according to the depths of the pixels in the periphery region of the hole in the picture to be filled, the available pixel(s) and the unavailable pixel(s) in the periphery region of the hole comprises:
calculating, according to the depth values of the pixels in the periphery region of the hole, a depth threshold by adopting a threshold segmentation algorithm; and
for pixels in the picture to be filled or for pixels in the peripheral region of the hole, setting pixel(s) with depth value(s) greater than or equal to the depth threshold as the available pixel(s), and setting pixel(s) with depth value(s) less than the depth threshold as the unavailable pixel(s).

14. The decoding method of claim 13, wherein the peripheral region of the hole is a region formed by candidate pixels, and the candidate pixels are obtained by following operations:
performing an expansion operation on a hole region, corresponding to the hole, in a hole mask picture of the hole;
performing an XOR operation on a picture obtained by performing the expansion operation and the hole mask picture of the hole, and taking pixels obtained by performing the XOR operation as candidate pixels,
wherein the hole mask picture of the hole is a sub-block picture partitioned from a hole mask picture corresponding to an original picture comprising a plurality of holes, and the sub-block picture comprises the hole.

15. The decoding method of claim 10, wherein filling the hole based at least on the available pixel(s) comprises:
filling the hole by using a neural network trained in advance to obtain a texture picture of the hole, wherein the available pixel(s) is(are) taken as a portion that needs attention in the inputted picture to be filled, through an attention mechanism during the filling.

16. The decoding method of claim 15, wherein the operation that the available pixel(s) is(are) taken as a portion that needs attention in the inputted picture to be filled, through the attention mechanism is implemented in following one or more manners:
performing, between a hole peripheral availability template picture for indicating the available pixel(s) and an input tensor of the neural network, a point multiplication operation by element position, to shield element(s) in the input tensor and corresponding to the unavailable pixel(s); and
performing, between a feature map obtained by performing a convolution operation on the available pixel(s) and a feature map of front M layer(s) obtained by processing of the neural network, point multiplication operation by the element position,
wherein a value of M is a subset of {1, 2, 3 ... N-1}, and the input tensor is a tensor obtained by cascading the picture to be filled and the hole mask picture of the hole.

17. The decoding method of claim 10, wherein filling the hole based at least on the available pixel(s) comprises:
performing, for each pixel to be filled in the hole, following operations respectively:
determining available pixel(s) in a same row as the pixel to be filled, and filling the pixel to be filled based on texture value(s) of the determined available pixel(s); or
determining available pixel(s) and unavailable pixel(s) in a same row as the pixel to be filled, and filling the pixel to be filled based on texture values of the determined available pixel(s) and unavailable pixel(s), wherein weight(s) assigned to the texture value(s) of the unavailable pixel(s) is(are) less than weight(s) assigned to the texture value(s) of the available pixel(s).

18. A decoding device, comprising:
a determining unit, configured to determine, according to depths of pixels in a periphery region of a hole in a picture to be filled, available pixel(s) and unavailable pixel(s) in the periphery region of the hole, wherein depth value(s) of the available pixel(s) is(are) greater than depth value(s) of the unavailable pixel(s); and
a filling unit, configured to fill the hole based at least on the available pixel(s),
wherein the picture to be filled is a picture acquired from an original picture obtained by performing a video decoding on an encoded picture.

19. An electronic device comprising: a processor and a memory storing computer programs executable on the processor, wherein the processor is configured to implement the method for picture filling of any one of claims 1 to 8 when executing the computer programs, or implement the decoding method of any one of claims 10 to 17 when executing the computer programs.

20. A computer-readable storage medium having stored thereon computer programs that, when executed by a processor, cause the processor to implement the method for picture filling of any one of claims 1 to 8, or implement the decoding method of any one of claims 10 to 17.
